# DEMANDE DE BREVET EUROPEEN

(11) **EP 3 207 802 A1**
(43) Date de publication de la demande: **23.08.2017**
(21) Numéro de dépôt: 16290034.4
(22) Date de dépôt: 17.02.2016
(51) Int. Cl.: A21B 3/04, A47J 27/16, F22B 1/28, F24C 15/32

(54) **DISPOSITIF DE GÉNÉRATION DE VAPEUR, FOUR COMPRENANT UN TEL DISPOSITIF, MÉTHODE DE GÉNÉRATION DE VAPEUR ET MÉTHODE DE CUISSON UTILISANT LADITE MÉTHODE**

(71) Demandeur: SEBP PAVAILLER, 26802 Portes-les-Valence (FR)
(72) Inventeur: Toulouse, Bruno, F - 26600 Tain L'Hermitage (FR)
(74) Mandataire: Kessler, Marc

(57) **Abrégé**

La présente invention se rapporte à un dispositif (1) de génération de vapeur d'un liquide comprenant : - un reservoir (2) apte à recevoir un liquide à vaporiser, en communication de fluide avec une source de liquide, le réservoir (2) se trouvant sous pression atmosphérique ou sous pression de liquide, - des moyens de chauffage du liquide dans ledit réservoir (2) pour amener et/ou maintenir le liquide à une température supérieure à celle à laquelle se trouve ledit réservoir (2) et inférieure à la température de vaporisation dudit liquide, - des moyens contrôlés d'acheminement dudit liquide chaud dudit réservoir (2) dans une enceinte (3), lesdits moyens contrôlés d'acheminement ne délivrant que la quantité de liquide nécessaire à la génération dans ladite enceinte (3) d'une quantité déterminée de vapeur de liquide, - des moyens contrôlant lesdits moyens d'acheminement dudit liquide chauffé dudit réservoir (2) dans ladite enceinte (3),
- une enceinte (3) en communication de fluide avec ledit réservoir (2) et se trouvant sous pression atmosphérique, dans laquelle de la vapeur dudit liquide est générée, - des moyens de vaporisation dudit liquide dans ladite enceinte (3) afin de générer ladite vapeur dudit liquide,
- des moyens de distribution, à partir de l'enceinte (3), de ladite vapeur générée.
La présente invention porte également sur un four comprenant un tel dispositif, sur une méthode de génération de vapeur d'un liquide et sur une méthode de cuisson mettant en oeuvre la méthode de génération de vapeur selon l'invention.

## Description

### Objet de l'invention

La présente invention se rapporte au domaine de la génération de vapeur, en particulier de vapeur d'eau, pour des appareils de traitement thermique, en particulier des fours de cuisson traditionnels ou des fours de cuisson à la vapeur, notamment pour la cuisson de produits alimentaires.

### Etat de la technique

Traditionnellement, un four comprend d'une part une cavité destinée à recevoir des produits, ou des objets, qui devront subir un traitement thermique, et d'autre part des moyens de production de chaleur, mettant en oeuvre soit la combustion d'un combustible, tel le gaz, le fioul ou le bois, soit une résistance électrique, ou bien le rayonnement solaire pour ce qui concerne les fours solaires.

L'utilisation de vapeur d'eau dans l'enceinte d'un four pour la cuisson, en particulier d'aliments, est bien connue, soit pour cuire les aliments par l'intermédiaire de la vapeur, soit pour accélérer la cuisson des aliments, tout en empêchant qu'ils ne se dessèchent, mais également pour en augmenter ainsi la qualité croustillante et l'aspect, notamment la brillance. En effet, pour la cuisson par exemple du pain, l'obtention d'un bon développement et d'un bel aspect de la croûte nécessite une humidification de la surface de l'aliment en début de cuisson.

Pour ce qui concerne les fours traditionnels, il a été proposé d'injecter de l'eau sur les éléments chauffants du four afin de générer et fournir de la vapeur dans le four, comme cela a été décrit par exemple dans le document FR2410225 pour un four de boulangerie à chariot. Toutefois, cette solution présente de nombreux inconvénients. Tout d'abord, afin de pouvoir produire efficacement de la vapeur d'eau, il est nécessaire d'attendre que les éléments chauffants du four atteignent une température élevée pour vaporiser l'eau. Par ailleurs, la vaporisation de l'eau refroidit les éléments chauffants, induisant des variations de température dans l'enceinte de cuisson et nécessitant un apport d'énergie important pour maintenir les éléments chauffants à bonne température, et donc le four à bonne température. De plus, cette solution présente l'inconvénient d'entartrer rapidement les éléments chauffants du four. D'autre part, une partie de l'eau injectée depuis l'extérieur de l'enceinte du four peut ne pas atteindre le dispositif de chauffe et ruisselle alors contre les parois périphériques de l'enceinte du four, nécessitant des moyens d'évacuation de cette eau résiduelle. De plus, de telles solutions présentent l'inconvénient de ne pas permettre une génération contrôlée de la vapeur d'eau, une quantité de vapeur qui est pourtant fonction du produit à cuire.

Une autre solution consiste à injecter de la vapeur directement dans la cavité du four traditionnel, ou du four de cuisson à la vapeur, à l'aide de générateurs de vapeur ou de buée, séparés et placés à l'extérieur de la chambre de cuisson. De tels générateurs de vapeur comprennent une alimentation en eau, une enceinte recevant cette eau, et des moyens de chauffage de cette eau dans ladite enceinte afin de produire de la vapeur. Ces générateurs de buée fonctionnent à la manière d'une bouilloire et sont par conséquent également très énergivores.

Ainsi, il a été proposé différentes solutions pour tenter de rendre les générateurs de buée pour fours de cuisson plus économes en énergie.

Par exemple, US1086034 décrit un four de cuisson comprenant, sur une de ses parois extérieures, un réservoir de vapeur d'eau, couplé à un générateur de vapeur comprenant un premier serpentin, dans lequel la vapeur d'eau est générée, et qui est en communication de fluide avec un second serpentin dans lequel l'eau à vaporiser est chauffée, les deux serpentins étant sous pression d'eau et étant exposés à la chaleur dégagée par la paroi du four sur laquelle ils sont disposés. La vapeur d'eau ainsi produite peut être soit introduite dans le four, soit être utilisée à l'extérieur du four, comme peut l'être d'ailleurs l'eau chaude produite par le second serpentin. Néanmoins, cette solution présente l'inconvénient d'être énergivore et de fournir une production d'eau chaude et de vapeur en continu, très peu contrôlée, une production qui va au delà des besoins en vapeur du four lors de la cuisson du pain. Ainsi, l'eau chaude et la vapeur d'eau excédentaires doivent être fréquemment évacuées d'une manière ou d'une autre.

Le document EP1617148 décrit, quant à lui, un générateur de buée disposé dans l'enceinte du four et en communication de fluide avec un réservoir externe d'eau. Toutefois, cette solution reste encore trop peu économe en énergie et en eau.

### Buts de l'invention

La présente invention vise à fournir un dispositif de génération de vapeur, un four comprenant un tel dispositif, une méthode de génération de vapeur et une méthode de cuisson dans un tel four, qui ne présentent pas les inconvénients de l'état de la technique.

La présente invention vise à fournir une alternative aux solutions de l'état de la technique existantes.

La présente invention vise également à fournir un dispositif de génération de vapeur, un four comprenant un tel dispositif, une méthode de génération de vapeur et une méthode de cuisson, ayant un rendement amélioré de production de vapeur d'un liquide, en particulier de vapeur d'eau, dans l'atmosphère intérieure d'une cavité de four, tout en étant économe en liquide, en particulier en eau et en énergie.

### Résumé de l'invention

La présente invention porte sur un dispositif de génération de vapeur d'un liquide comprenant un réservoir, apte à recevoir un liquide à vaporiser, en communication de fluide avec une source de liquide, le réservoir se trouvant sous pression atmosphérique ou sous pression de liquide, des moyens de chauffage du liquide dans le réservoir pour amener et/ou maintenir le liquide à une température supérieure à celle à laquelle se trouve le réservoir et inférieure à la température de vaporisation du liquide, des moyens contrôlés d'acheminement du liquide chaud du réservoir dans une enceinte, ces moyens ne délivrant que la quantité de liquide nécessaire à la génération dans l'enceinte d'une quantité déterminée de vapeur de liquide, des moyens contrôlant les moyens d'acheminement du liquide chauffé du réservoir dans l'enceinte, une enceinte, en communication de fluide avec le réservoir et se trouvant sous pression atmosphérique, dans laquelle de la vapeur du liquide est générée, des moyens de vaporisation du liquide dans l'enceinte afin de générer la vapeur du liquide, des moyens de distribution, à partir de l'enceinte, de la vapeur générée.

Selon des modes préférés de l'invention, le dispositif de l'invention comprend au moins une, ou une combinaison quelconque appropriée, des caractéristiques suivantes :
- les moyens contrôlés d'acheminement du liquide du réservoir dans l'enceinte comprennent au moins un dispositif de transfert qui est une électrovanne pilotée,
- le dispositif comprend en outre des moyens de contrôle des moyens de chauffage du liquide dans le réservoir et/ou des moyens de vaporisation du liquide dans l'enceinte et/ou des moyens de distribution de la vapeur générée,
- le dispositif comprend en outre des moyens contrôlés d'acheminement du liquide de la source de liquide dans le réservoir pour un transfert contrôlé du liquide dans le réservoir,
- le liquide est de l'eau,

La présente invention porte aussi sur un four de cuisson comprenant un ou plusieurs dispositifs selon l'invention.

Dans un mode de réalisation préféré du four selon l'invention, le four comprend des moyens de contrôle et/ou des moyens de commande et/ou des moyens de programmation de la cuisson des produits à cuire, couplés et/ou interagissant et/ou contrôlant les moyens contrôlés d'acheminement du liquide du réservoir vers l'enceinte et/ou les moyens de chauffage du liquide dans le réservoir et/ou les moyens de vaporisation du liquide dans l'enceinte et/ou éventuellement les moyens d'acheminement du liquide depuis la source de liquide vers le réservoir.

Dans un mode de réalisation préféré du four selon l'invention, le four est un four de boulangerie.

La présente invention porte également sur une méthode de génération de vapeur d'un liquide comprenant les étapes de déterminer une quantité de vapeur de liquide à générer, d'amener un liquide à partir d'une source de liquide dans un réservoir se trouvant, en fonctionnement, sous pression atmosphérique ou sous pression de liquide, de chauffer et/ou de maintenir le liquide dans le réservoir à une température supérieure à celle à laquelle se trouve le réservoir et inférieure à la température de vaporisation du liquide, d'amener, d'une façon contrôlée, le liquide chaud du réservoir dans une enceinte qui est, en fonctionnement, sous pression atmosphérique, afin de délivrer à l'enceinte une quantité de liquide nécessaire à la génération, dans l'enceinte, d'une quantité déterminée de vapeur de liquide, de générer dans l'enceinte de la vapeur de liquide, de distribuer la vapeur de liquide générée à au moins un appareil de traitement thermique.

Selon des modes préférés de l'invention, la méthode de génération de vapeur d'un liquide selon l'invention comprend au moins une, ou une combinaison quelconque appropriée, des caractéristiques suivantes :
- la méthode comprend une étape de chauffage du liquide avant son acheminement dans le réservoir à une température supérieure à celle à laquelle se trouve le réservoir,
- la méthode comprend une étape de détermination de la quantité de vapeur de liquide à générer en fonction de la nature du produit à traiter thermiquement dans au moins un appareil auquel le dispositif 1 de génération de vapeur peut être couplé.

La présente invention porte aussi sur une méthode de cuisson d'au moins un produit alimentaire dans un four de cuisson comprenant une cavité de cuisson, la méthode comprenant la mise en oeuvre de la méthode de génération de vapeur d'un liquide selon l'invention, puis l'injection de la vapeur de liquide générée dans la cavité de cuisson lors de la cuisson du produit alimentaire.

Selon des modes préférés de l'invention, la méthode de cuisson d'au moins un produit alimentaire dans un four de cuisson selon l'invention comprend au moins une, ou une combinaison quelconque appropriée, des caractéristiques suivantes :
- la méthode comprend une étape de détermination de la nature du produit alimentaire à cuire et/ou du cycle ou programme de cuisson,
- la méthode comprend une étape de contrôle et/ou de commande et/ou d'interaction, en fonction de la détermination de la nature du produit alimentaire à cuire et/ou du cycle ou programme de cuisson, de l'acheminement du liquide vers le réservoir et/ou de l'acheminement du liquide du réservoir dans l'enceinte et/ou du chauffage du liquide dans le réservoir et/ou de la vaporisation du liquide dans l'enceinte et/ou du chauffage du liquide durant son acheminement dans l'enceinte et/ou éventuellement durant son acheminement dans le réservoir.

### Brève description des figures

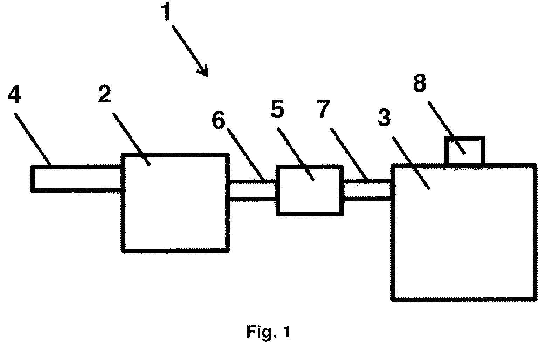

La figure 1 est une représentation schématique du dispositif de génération de vapeur selon l'invention.

### Description détaillée de l'invention

Le dispositif 1 de génération de vapeur selon l'invention (figure 1) comprend des moyens d'acheminement d'un liquide dans un réservoir 2 à partir d'une source de liquide, un réservoir 2 dans lequel le liquide est chauffé. Il comprend en outre une enceinte 3, distincte du réservoir 2, dans laquelle est générée de la vapeur de liquide, le réservoir 2 et l'enceinte 3 étant en communication de fluide, et des moyens de distribution de la vapeur produite.

Le liquide dont il est question, dans la présente invention, est tous liquides adéquats pour, ou accompagnant, le traitement thermique d'un ou d'une multitude de produits devant subir un traitement thermique. Pour un mode de réalisation de l'invention ayant trait à la cuisson de produits alimentaires, le liquide est de préférence de l'eau, mais il peut également s'agir d'eau, ou un mélange d'huile et d'eau, comprenant un ou plusieurs additifs améliorant la cuisson, ou un ou plusieurs pigments.

Le réservoir 2 a toute forme adéquate et est fait de tous matériaux, ou assemblage(s) de matériaux, adéquats. Il est destiné, et apte, à recevoir, et à stocker, du liquide avant son acheminement dans l'enceinte 3. Il comprend, ou est en communication avec, tous moyens adéquats d'acheminement du liquide dans ledit réservoir 2 à partir de la source de liquide. Ces moyens comprennent, de préférence, une ou plusieurs ouvertures pratiquées dans le réservoir 2 et au moins une canalisation 4, en communication de fluide avec la source de liquide. Avantageusement, ces moyens permettent le transfert contrôlé du liquide de la source de liquide vers le réservoir 2, de préférence selon différents paramètres modifiables ou réglables qui sont fonction de la quantité de vapeur à produire. Cela présente l'avantage d'amener une quantité de liquide déterminée dans le réservoir 2 pour la génération d'une quantité définie de vapeur de liquide. De préférence, ce transfert contrôlé de liquide se fait de façon automatique ou piloté par l'utilisateur du dispositif de génération de vapeur 1 ou du four comprenant dispositif de génération de vapeur 1. De préférence, ce transfert automatique ou piloté se fait via des moyens de programmation du dispositif de génération de vapeur 1, ou du four comprenant ledit dispositif, comprenant une interface utilisateur, comme par exemple un régulateur ou un écran tactile.

Le transfert de liquide peut être fait en une seule fois ou en plusieurs fois, espacées par des lapses de temps programmables et variables, par exemple une centaine de millilitres durant quelques secondes. Le transfert séquentiel de liquide dans le réservoir 2 présente l'avantage de réduire les chocs thermiques.

De préférence, les moyens d'acheminement du liquide dans le réservoir 2 comprennent une pompe ou une valve. Avantageusement, il s'agit d'une vanne, encore plus avantageusement il s'agit d'une électrovanne, de préférence pilotée.

Le réservoir 2 comprend principalement, ou majoritairement, du liquide, sans pour autant exclure la présence d'une faible proportion de vapeur de liquide.

Dans un mode de réalisation particulier de l'invention, le réservoir 2, en particulier en fonctionnement, est sous pression atmosphérique, ou sensiblement sous pression atmosphérique. Cela présente l'avantage de nécessiter moins d'énergie pour chauffer, et maintenir chaud, le liquide qui se trouve dans le réservoir 2, en comparaison avec un réservoir 2 qui serait sous pression de liquide, par exemple, et pour ce qui concerne la génération de vapeur d'eau, en comparaison à une enceinte sous pression d'eau, qui serait en communication de fluide avec une alimentation en eau sanitaire, qui se trouve généralement sous une pression d'environ 3 bars (300 kPa).

Dans un autre mode de réalisation particulier de l'invention, le réservoir 2 est sous pression de liquide, de préférence à une pression régulée, avantageusement à une pression inférieure à la pression à laquelle se trouve le liquide provenant de la source de liquide. Par exemple, et pour ce qui concerne la génération de vapeur d'eau, le réservoir 2 se trouve à une pression régulée, par exemple via un réducteur de pression, à une pression inférieure d'environ 2 bars à la pression du réseau d'eau. Cela permet d'assurer une injection précise de liquide, par exemple d'eau, en jouant sur le temps d'ouverture des moyens d'acheminement du liquide, par exemple de l'eau, dans le réservoir 2 et donc en jouant sur la différence de pressions entre le réservoir 2 et l'enceinte 3. L'utilisation d'une pression de liquide dans le réservoir 2 permet une injection rapide du liquide vers l'enceinte 3.

Dans ce mode de réalisation, le réservoir 2 est étanche afin de permettre mise sous pression et comprend éventuellement une soupape de sécurité.

De préférence, le liquide est acheminé depuis la source de liquide dans le réservoir 2, à une température inférieure, supérieure ou égale, à la température ambiante à laquelle se trouve le réservoir 2, ou à la température à laquelle le liquide est chauffé, ou maintenu, dans le réservoir 2.

Dans le mode de réalisation dans lequel le liquide est acheminé à une température supérieure à la température à laquelle se trouve le réservoir 2, de préférence supérieure à la température ambiante, les moyens d'acheminement du liquide dans le réservoir 2 sont, de préférence, isolés thermiquement ou sont thermostatés.

Dans le mode de réalisation selon l'invention dans lequel le liquide est de l'eau, la source de liquide, en amont du réservoir 2, est de préférence un circuit d'alimentation d'eau sanitaire, une installation de fourniture d'eau chaude sanitaire, ou tous réservoirs adéquats.

De préférence, les moyens d'acheminement du liquide dans le réservoir 2 comprennent en outre un ou plusieurs filtres afin d'éliminer les impuretés éventuellement présentent dans le liquide.

De préférence, le réservoir 2 comprend en outre un clapet anti-retour, avantageusement disposé entre le réservoir 2 et la source de liquide, ce qui présente l'avantage de limiter les déperditions de chaleur vers la source de liquide et de limiter le chauffage au liquide présent dans le réservoir 2.

De préférence, le réservoir 2 comprend en outre des moyens de compensation de la dilatation du liquide, comprenant par exemple un groupe de sécurité ou un système déformable sous la pression comprenant par exemple un réservoir hydraulique à membrane.

De préférence, le réservoir 2 comprend en outre des moyens de détartrage du liquide.

Quel que soit le mode de réalisation du dispositif 1 de génération de vapeur selon l'invention, le liquide se trouve dans le réservoir 2 à une température supérieure à la température à laquelle se trouve le réservoir 2, ou le dispositif de génération de vapeur 1, ou l'appareil comprenant ledit dispositif de génération de vapeur 1, de préférence supérieure à la température ambiante, avantageusement à une température inférieure à la température d'ébullition ou de vaporisation du liquide.

A ses fins, le dispositif de génération de vapeur 1 comprend des moyens de chauffage du liquide présent dans le réservoir 2. Ces moyens de chauffage peuvent être disposés dans le réservoir 2, ou à l'extérieur du réservoir 2.

Le préchauffage, dans le réservoir 2, du liquide à vaporiser, avant son arrivée dans l'enceinte 3 de vaporisation, présente l'avantage de permettre la diminution des températures de chauffe des moyens de vaporisation du liquide dans l'enceinte 3. Cela permet une économie d'énergie importante. Malgré le fait qu'il faille chauffer le liquide dans le réservoir 2 en plus de la production de vapeur dans l'enceinte 3, la réduction de la température de régulation de l'enceinte 3 permet un gain d'énergie significatif. Pour le dispositif 1 de génération de vapeur, l'économie d'énergie réalisée est d'environ 37% en comparaison avec un dispositif classique, et d'environ 6% pour le four comprenant le dispositif 1 selon l'invention en comparaison avec un four classique.

Dans le mode de réalisation dans lequel le liquide est de l'eau, et si l'on considère que le dispositif 1 de génération de vapeur se trouve au niveau de la mer et que le réservoir 2 est sous pression atmosphérique, l'eau est chauffée dans le réservoir 2 à une température comprise entre environ 40 et environ 95 °C.

Le liquide préchauffé dans le réservoir 2 est amené par des moyens contrôlés d'acheminement du liquide du réservoir 2 vers l'enceinte 3. De préférence, ces moyens d'acheminement sont isolés thermiquement ou sont thermostatés. De préférence, ils comprennent un ou plusieurs dispositifs ou ensembles d'injection, qui comprend, ou comprennent, au moins un dispositif 5 de transfert du liquide du réservoir 2 vers l'enceinte 3, au moins une conduite 6 de sortie du liquide du réservoir 2 et au moins une conduite 7 d'entrée du liquide dans l'enceinte 3.

De préférence, le dispositif 5 de transfert du liquide du réservoir 2 dans l'enceinte 3 permet le transfert contrôlé du liquide, selon différents paramètres modifiables ou réglables, de préférence en fonction du type de produit ou aliments à cuire et/ou du type de cuisson et/ou d'un ou plusieurs cycles de cuisson. Cela présente l'avantage d'amener une quantité de liquide déterminée dans l'enceinte 3 pour la génération d'une quantité définie de vapeur de liquide. Avantageusement, ce transfert contrôlé du liquide se fait par des moyens de contrôle, de façon automatique ou pilotée par l'utilisateur du dispositif de génération de vapeur 1 ou du four comprenant dispositif de génération de vapeur 1. De préférence, ce transfert automatique ou piloté se fait via des moyens de programmation du dispositif de génération de vapeur 1 ou du four comprenant ledit dispositif comprenant une interface utilisateur, comme par exemple un régulateur ou un écran tactile. Avantageusement ces moyens de programmation interagissent avec, comprennent ou sont, les moyens de programmation de l'acheminement du liquide de la source de liquide dans le réservoir 2.

Le transfert de liquide du réservoir 2 dans l'enceinte 3 peut se faire en une seule fois ou en plusieurs fois, espacées par des lapses de temps programmables et variables, par exemple une centaine de millilitres durant quelques secondes. Le transfert séquentiel de liquide présente l'avantage de réduire les chocs thermiques.

De préférence, le dispositif 5 de transfert est une pompe ou une valve. Avantageusement, il s'agit d'une vanne, encore plus avantageusement il s'agit d'une électrovanne, de préférence pilotée.

L'enceinte 3, en particulier en fonctionnement, est sous pression atmosphérique, ou sensiblement sous pression atmosphérique. Cela présente l'avantage de nécessiter moins d'énergie pour générer de la vapeur de liquide, en comparaison avec une enceinte qui serait sous pression de liquide. Par ailleurs, la pression de vapeur permet à cette dernière d'être acheminée vers son lieu d'utilisation sans l'utilisation de moyens énergivores, tels des pompes.

L'enceinte 3 a toute forme adéquate et elle est faite de tous matériaux, ou assemblage(s) de matériaux, adéquats. Elle est destinée, et apte, à recevoir le liquide à vaporiser et comprend, ou est en communication avec, tous moyens adéquats d'acheminement du liquide dans l'enceinte 3, par exemple une ou plusieurs ouvertures et une ou plusieurs conduites ou canalisations 7. En outre, elle comprend, ou est en communication avec, des moyens de distribution de la vapeur générée, pour son acheminement vers son lieu d'utilisation, par exemple vers l'enceinte de cuisson d'un four, ces moyens de distribution de la vapeur générée comprenant une ou plusieurs ouvertures et une ou plusieurs conduites ou canalisations 8.

En fonctionnement, l'enceinte 3 comprend principalement, ou majoritairement, de la vapeur de liquide, sans pour autant exclure la présence de liquide avant vaporisation ou provenant de la condensation de la vapeur sur les parois de l'enceinte 3.

La vapeur de liquide dans l'enceinte 3 est générée, de préférence quasi instantanément, à l'aide de moyens de vaporisation du liquide aptes à vaporiser le liquide amené ou présent dans l'enceinte 3.

Les moyens de vaporisation du liquide peuvent être disposés dans, ou à l'extérieur de, l'enceinte 3.

La vapeur de liquide dans l'enceinte 3 est générée, de préférence, à partir du liquide introduit dans l'enceinte 3 à une température supérieure à la température à laquelle se trouve le dispositif de génération de vapeur 1 ou l'appareil comprenant ledit dispositif de génération de vapeur 1, de préférence supérieure à la température ambiante, avantageusement à une température inférieure à la température d'ébullition ou de vaporisation du liquide, ce qui présente l'avantage de maximiser le gain énergétique de génération de vapeur.

Dans le mode de réalisation dans lequel le liquide est de l'eau, et si l'on considère que le dispositif 1 de génération de vapeur se trouve au niveau de la mer et que le réservoir 2 est sous pression atmosphérique, l'eau est chauffée à une température comprise entre environ 180 et environ 400 °C.

Les moyens de distribution de la vapeur produite dans l'enceinte 3 comprennent au moins une conduite 8 d'acheminement de ladite vapeur vers au moins un appareil auquel le dispositif 1 de génération de vapeur est couplé et/ou intégré, par exemple vers la cavité de cuisson d'un four.

L'utilisation du réservoir 2, distinct de l'enceinte 3, présente l'avantage, pour un volume de vapeur donné, de pouvoir réduire les dimensions et le poids de l'enceinte 3 de génération de vapeur par rapport aux dispositifs connus, ce qui lui permet d'avoir un encombrement réduit, et ainsi, de pouvoir être disposée astucieusement et aisément à proximité, ou dans le bâti, du four destiné à le recevoir. Par ailleurs, cet encombrement réduit permet également une économie d'énergie de par la réduction de la quantité d'énergie nécessaire pour chauffer un volume réduit et une masse réduite pour ce qui concerne l'enceinte 3.

De plus, l'utilisation du réservoir 2 et des moyens contrôlés d'acheminement du liquide du réservoir 2 vers l'enceinte 3 permettent de contrôler la quantité, et de préférence également le moment de la génération de vapeur, en contrôlant la quantité de liquide juste nécessaire pour générer la quantité de vapeur nécessaire, selon les étapes du cycle de cuisson et/ou en fonction du produit à cuire.

Les moyens de chauffage du liquide dans le réservoir 2 et/ou les moyens de vaporisation du liquide dans l'enceinte 3 et/ou les moyens pour thermostater l'acheminement du liquide dans l'enceinte 3 et/ou éventuellement pour l'acheminement du liquide dans le réservoir 2, comprennent et/ou mettent en oeuvre des moyens de combustion d'un gaz ou d'un combustible liquide, une ou plusieurs résistances électriques, ou le rayonnement solaire. De préférence, ces moyens sont les moyens de chauffage de l'appareil auquel le dispositif 1 de génération de vapeur est couplé ou permettent l'utilisation de la chaleur de l'appareil auquel le dispositif 1 de génération de vapeur est couplé. De préférence, ces moyens comprennent et/ou mettent en oeuvre des moyens de cogénération de chaleur à partir de la chaleur du ou des appareils au(x)quel(s) le dispositif 1 de génération de vapeur est couplé. Avantageusement, ces moyens comprennent un échangeur de chaleur.

Le dispositif 1 de génération de vapeur est apte à être couplé à, ou fait partie d'un ou plusieurs appareils, ou ensembles, aptes à utiliser de la vapeur d'un liquide pour le traitement thermique d'un ou plusieurs produits ou objets. De préférence, il s'agit d'un ou plusieurs fours de cuisson, fours traditionnels, professionnels ou domestiques, de préférence pour la cuisson de produits alimentaires, en particulier du pain, ou des fours de cuisson à la vapeur.

De préférence, le ou les appareils comprenant le dispositif 1 de génération de vapeur selon l'invention comprend tous moyens adéquats pour chauffer la cavité de cuisson que le ou les compose. De préférence, il comprend, ou ils comprennent, également des moyens de brassage de l'atmosphère intérieure de la cavité de cuisson, par exemple une turbine ou un ventilateur, et, éventuellement, des moyens d'évacuation de la chaleur et/ou de la vapeur présente dans ladite cavité de cuisson à déclenchement manuel ou automatique.

De préférence, le ou les appareils comprenant le dispositif 1 selon l'invention, par exemple le ou les fours de cuisson, comprend ou comprennent en outre des moyens de contrôle et/ou des moyens de commande et/ou des moyens de programmation du traitement thermique des produits à traiter, par exemple de la cuisson d'aliments. Avantageusement, ces moyens sont couplés et/ou interagissent et/ou contrôlent les moyens d'acheminement contrôlé du liquide du réservoir 2 dans l'enceinte 3 et/ou les moyens d'acheminement du liquide d'une source de liquide dans le réservoir 2, de préférence également les moyens de chauffage du liquide dans le réservoir 2 et/ou les moyens de vaporisation du liquide dans l'enceinte 3 et/ou les moyens pour thermostater l'acheminement du liquide dans l'enceinte 3 et/ou éventuellement pour l'acheminement du liquide dans le réservoir 2.

De préférence, le ou les appareils comprenant le dispositif 1 selon l'invention, peuvent fonctionner selon des modes de fonctionnement différents, comme par exemple un mode dit « économique » dans lequel l'économie d'énergie est privilégiée, ou selon un mode dit « optimal » dans lequel le fonctionnement optimal du four et du dispositif 1 générateur de vapeur est privilégié, ou un mode dit « équilibré » dans lequel le fonctionnement optimal du four et du dispositif 1 générateur de vapeur se fait tout en étant économe en énergie.

De préférence, la méthode de génération de vapeur d'un liquide selon l'invention met en oeuvre le dispositif 1 de génération de vapeur selon l'invention.

La méthode comprend une première étape d'acheminement d'un liquide à partir d'une source de liquide dans un réservoir 2, qui est, en particulier en fonctionnement, sous pression atmosphérique, ou sensiblement sous pression atmosphérique, ou sous pression de liquide. De préférence, cet acheminement est contrôlé. Il se fait en fonction de la quantité de vapeur de liquide à générer. De préférence, la quantité de liquide amené dans le réservoir 2 est telle qu'elle permette la génération de la quantité de vapeur nécessaire au(x) appareil(s) au(x)quel(s) le dispositif 1 de génération de vapeur est couplé. Avantageusement, la quantité de liquide amené dans le réservoir 2 est fonction du produit à traiter thermiquement, par exemple de l'aliment à cuire, et/ou du cycle ou programme de traitement thermique et/ou de la phase du cycle ou programme de traitement thermique.

De préférence, la méthode comprend en outre une étape préalable de filtration du liquide avant son acheminement dans le réservoir 2.

De préférence, le liquide acheminé dans le réservoir 2, l'est à une température supérieure à la température à laquelle se trouve le réservoir 2, de préférence supérieure à la température ambiante, ou à la température à laquelle le liquide est chauffé, ou maintenu, dans le réservoir 2. Dans ce mode de réalisation, l'acheminement du liquide dans le réservoir 2 se fait de préférence de manière isolée thermiquement ou de façon thermostatée.

La méthode selon l'invention comprend en outre une étape de chauffage et/ou de maintien du liquide dans le réservoir 2 à une température supérieure à la température ambiante à laquelle se trouve le réservoir 2, ou le dispositif de génération de vapeur 1, ou l'appareil comprenant ledit dispositif de génération de vapeur 1, et avantageusement à une température inférieure à la température d'ébullition ou de vaporisation du liquide.

Le liquide chauffé est ensuite transféré, de préférence de manière isolée thermiquement ou de façon thermostatée, du réservoir 2 dans l'enceinte 3, qui en fonctionnement, est sous pression atmosphérique, ou sensiblement sous pression atmosphérique. De préférence, ce transfert est contrôlé. Il se fait en fonction de la quantité de vapeur de liquide à générer. De préférence, la quantité de liquide amené dans l'enceinte 3 est telle qu'elle permette la génération de la quantité de vapeur nécessaire au(x) appareil(s) au(x)quel(s) le dispositif 1 de génération de vapeur est couplé. Avantageusement, la quantité de liquide amené dans l'enceinte 3 est fonction du produit à traiter thermiquement, par exemple de l'aliment à cuire, et/ou du cycle ou programme de traitement thermique et/ou de la phase du cycle ou programme de traitement thermique.

Le liquide, préalablement chauffé, est ensuite chauffé à une température telle que le liquide se vaporise, de préférence instantanément ou quasi instantanément.

La vapeur est ensuite acheminée, de préférence instantanément ou quasi instantanément après sa génération, vers au moins un appareil auquel le dispositif 1 de génération de vapeur est couplé et/ou intégré.

Dans la méthode selon l'invention, le chauffage du liquide dans le réservoir 2 et/ou la vaporisation du liquide dans l'enceinte 3 et/ou le chauffage des moyens d'acheminement du liquide dans l'enceinte 3 et/ou éventuellement pour l'acheminement du liquide dans le réservoir 2, est ou sont réalisés par la combustion d'un gaz ou d'un combustible liquide, par une ou plusieurs résistances électriques, ou par le rayonnement solaire. De préférence, ce chauffage utilise la chaleur produite et/ou utilisée par le ou les appareils au(x)quel(s) le dispositif 1 de génération de vapeur est couplé.

La méthode selon l'invention est de préférence mise en oeuvre dans une méthode de traitement thermique d'un ou plusieurs produits, de préférence une méthode de cuisson de produits alimentaires, en particulier du pain, mettant en oeuvre un ou plusieurs fours traditionnels, professionnels ou domestiques, ou des fours de cuisson à la vapeur.

De préférence, la méthode de traitement thermique, par exemple de cuisson de produits alimentaires, comprend une étape de contrôle et/ou de commande du traitement thermique des produits à traiter.

De préférence, la méthode comprend une étape de contrôle et/ou d'interaction de l'acheminement du liquide dans le réservoir 2 et/ou de l'acheminement du liquide du réservoir 2 dans l'enceinte 3 et/ou du chauffage du liquide dans le réservoir 2 et/ou de la vaporisation du liquide dans l'enceinte 3 et/ou du chauffage du liquide durant son acheminement dans l'enceinte 3 et/ou éventuellement durant son acheminement dans le réservoir 2, par et/ou avec le contrôle et/ou la commande du traitement thermique des produits à traiter thermiquement, en particulier à cuire.

De préférence, la méthode comprend une étape de détermination du produit à cuire et/ou du cycle ou programme de cuisson, cette détermination avantageusement interagissant avec et/ou contrôlant le traitement thermique des produits à traiter et/ou l'acheminement du liquide vers le réservoir 2 et/ou de l'acheminement du liquide du réservoir 2 vers l'enceinte 3 et/ou le chauffage du liquide dans le réservoir 2 et/ou la vaporisation du liquide dans l'enceinte 3 et/ou le chauffage du liquide durant son acheminement dans l'enceinte 3 et/ou éventuellement durant son acheminement dans le réservoir 2. Avantageusement, cette détermination permet l'évaluation de la quantité de vapeur de liquide à générer dans l'enceinte 3 et la quantité de liquide à chauffer dans le réservoir 2.

## Revendications

1. Dispositif (1) de génération de vapeur d'un liquide comprenant :
- un réservoir (2) apte à recevoir un liquide à vaporiser, en communication de fluide avec une source de liquide, ledit réservoir (2) se trouvant sous pression atmosphérique ou sous pression de liquide,
- des moyens de chauffage du liquide dans ledit réservoir (2) pour amener et/ou maintenir le liquide à une température supérieure à celle à laquelle se trouve ledit réservoir (2) et inférieure à la température de vaporisation dudit liquide,
- des moyens contrôlés d'acheminement dudit liquide chaud dudit réservoir (2) dans une enceinte (3), lesdits moyens contrôlés d'acheminement ne délivrant que la quantité de liquide nécessaire à la génération dans ladite enceinte (3) d'une quantité déterminée de vapeur de liquide,
- des moyens contrôlant lesdits moyens d'acheminement dudit liquide chauffé dudit réservoir (2) dans ladite enceinte (3),
- une enceinte (3) en communication de fluide avec ledit réservoir (2) et se trouvant sous pression atmosphérique, dans laquelle de la vapeur dudit liquide est générée,
- des moyens de vaporisation dudit liquide dans ladite enceinte (3) afin de générer ladite vapeur dudit liquide,
- des moyens de distribution, à partir de ladite enceinte (3), de ladite vapeur générée.

2. Le dispositif (1) selon la revendication précédente, dans lequel les moyens contrôlés d'acheminement du liquide du réservoir (2) dans l'enceinte (3) comprennent au moins un dispositif de transfert (5) qui est une électrovanne pilotée.

3. Le dispositif (1) selon l'une quelconque des revendications précédentes, comprenant en outre des moyens de contrôle des moyens de chauffage du liquide dans le réservoir (2) et/ou des moyens de vaporisation du liquide dans ladite enceinte (3) et/ou des moyens de distribution de ladite vapeur générée.

4. Le dispositif (1) selon l'une quelconque des revendications précédentes, comprenant en outre des moyens contrôlés d'acheminement du liquide de la source de liquide dans le réservoir (2) pour un transfert contrôlé dudit liquide dans ledit réservoir (2).

5. Le dispositif (1) selon l'une quelconque des revendications précédentes, dans lequel le liquide est de l'eau

6. Four comprenant au moins un dispositif (1) de génération de vapeur d'un liquide selon l'une quelconque des revendications précédentes.

7. Le four selon la revendication 6 comprenant des moyens de contrôle et/ou de commande et/ou de programmation de la cuisson des produits à cuire, couplés et/ou interagissant et/ou contrôlant les moyens contrôlés d'acheminement du liquide du réservoir (2) vers l'enceinte (3) et/ou les moyens de chauffage du liquide dans le réservoir (2) et/ou les moyens de vaporisation du liquide dans l'enceinte (3) et/ou éventuellement les moyens d'acheminement du liquide depuis la source de liquide vers le réservoir (2).

8. Four de cuisson selon les revendications 6 ou 7 étant un four de boulangerie.

9. Méthode de génération de vapeur d'un liquide comprenant les étapes suivantes :
- déterminer une quantité de vapeur de liquide à générer,
- amener un liquide à partir d'une source de liquide dans un réservoir (2) se trouvant, en fonctionnement, sous pression atmosphérique ou sous pression de liquide,
- chauffer et/ou maintenir ledit liquide dans ledit réservoir (2) à une température supérieure à celle à laquelle se trouve ledit réservoir (2) et inférieure à la température de vaporisation dudit liquide,
- amener, d'une façon contrôlée, ledit liquide chaud dudit réservoir (2) dans une enceinte (3) qui est, en fonctionnement, sous pression atmosphérique, afin de délivrer à ladite enceinte (3) une quantité de liquide nécessaire à la génération, dans ladite enceinte (3), d'une quantité déterminée de vapeur de liquide,
- générer dans ladite enceinte (3) de la vapeur de liquide,
- distribuer ladite vapeur de liquide générée à au moins un appareil de traitement thermique.

10. La méthode selon la revendication 9 comprenant une étape de chauffage du liquide avant son acheminement dans le réservoir (2) à une température supérieure à celle à laquelle se trouve ledit réservoir (2).

11. La méthode selon l'une quelconque des revendications 9 ou 10 comprenant une étape de détermination de la quantité de vapeur de liquide à générer en fonction de la nature du produit à traiter thermiquement dans au moins un appareil auquel le dispositif 1 de génération de vapeur peut être couplé.

12. Méthode de cuisson d'au moins un produit alimentaire dans un four de cuisson comprenant une cavité de cuisson, ladite méthode comprenant la mise en oeuvre de la méthode de génération de vapeur d'un liquide selon l'une quelconque des revendications 9 à 11, puis l'injection de la vapeur de liquide générée dans ladite cavité de cuisson lors de la cuisson dudit au moins un produit alimentaire.

13. Méthode de cuisson selon la revendication 12 comprenant en outre une étape de détermination de la nature du produit alimentaire à cuire et/ou du cycle ou programme de cuisson.

14. Méthode de cuisson selon la revendication 13 comprenant une étape de contrôle et/ou de commande et/ou d'interaction, en fonction de la détermination de la nature du produit alimentaire à cuire et/ou du cycle ou programme de cuisson, de l'acheminement du liquide vers le réservoir (2) et/ou de l'acheminement du liquide du réservoir (2) dans l'enceinte (3) et/ou du chauffage du liquide dans le réservoir (2) et/ou de la vaporisation du liquide dans l'enceinte (3) et/ou du chauffage du liquide durant son acheminement dans l'enceinte (3) et/ou éventuellement durant son acheminement dans le réservoir (2).
